Europäisches Patentamt

**European Patent Office**

**Office européen des brevets**

(19)

(11) Publication number: **0 209 498**
A2

# EUROPEAN PATENT APPLICATION

(12)

(21) Application number: 86830195.3

(22) Date of filing: 09.07.86

(51) Int. Cl.⁴: **A 01 G 27/00,** A 01 G 31/00

(30) Priority: 10.07.85 IT 2245085 U
09.12.85 IT 2411785 U

(71) Applicant: **Falmali, Giacomo, Via Ruggeri, 13,
I-29010 San Nicolo' di Rottofreno Piacenza (IT)**

(43) Date of publication of application: 21.01.87
**Bulletin 87/4**

(72) Inventor: **Falmali, Giacomo, Via Ruggeri, 13, I-29010 San
Nicolo' di Rottofreno Piacenza (IT)**

(84) Designated Contracting States: **AT BE CH DE FR GB IT LI
LU NL SE**

(74) Representative: **De Nova, Roberto et al, c/o
Jacobacci-Casetta & Perani S.p.A. Via Visconti di
Modrone 7, I-20122 Milano (IT)**

(54) **A pot for ornamental plants and the like.**

(57) A pot (1, 101) for ornamental plants which requires no
daily watering, but can be left unattended for long time
periods without the plants finding themselves in a condition
of drought, comprises an open top vessel (2, 102) having a
bottom (4, 104) adapted to accommodate, up to a set level (B)
above the bottom (4, 104), a first supply of a liquid (A, N), and
a bottle-like container (9, 109) having a bottom (11, 111) and
an oppositely located delivery mouth (12, 112) with a restric-
ted cross-sectional area, being mounted upside down at the
edge of said vessel (2, 102), with said mouth (12, 112) positioned at the same height as said level (B), and adapted to
contain an additional supply (D, M) of the liquid for replenish-
ing the first supply (A, N).

## DESCRIPTION

This invention relates to a pot for ornamental plants and the like, of a type which comprises an open-top vessel having a bottom and intended for storing a liquid therein, up to a set level above said bottom.

As is known, in terrace and indoor gardening, the need is felt for pots, specifically ornamental plant pots, which can dispense with daily watering and be left to themselves for long time periods, of up to several weeks, without the plants finding themwelves in a drought condition.

According to to one prior technique, double bottom pots have been suggested wherein a first, lower bottom and a second, upper bottom adapted to hold the soil are in mutually spaced-apart relationship and define a chamber therebetween adapted for storing, up to a set level, an amount of water therein, and to form an air plenum above said level.

Now, such prior and widely utilized pots, as specified above, while being satisfatory from several standpoints, still have the disadvantage of short-term performance. In fact, they cannot be left unattended for long time periods because the water stored up in their double bottom is soon depleted, being drawn up into the soil by the roots of the plants which pass through the upper bottom of the vessel down into the stored water.

The water supply is depleted at a still faster rate where transfer of the water to the soil is favored by any cloths or other absorbing materials provided in the vessel and penetrating through the upper bottom thereof, or by a part of the soil being in direct contact with the water.

It should be noted that that any attempt to extend operating life by increasing the gap between the two bottoms, so as to store a water supply at a higher level therein, is bound to yield no useful result. In fact, on the water supply level dropping below a certain height and its free surface moving away from the second bottom, the roots or cuttings are left uncovered with too long a section and no longer provide for the desired water drawing action toward the soil.

Also noteworthy is that it has proved impossible to increase operating life by raising the level of the water supply in the double bottom at the expense of the air plenum volume.

In that case, in fact, the occurrence of too rich a flow of water of stored water toward the soil in combination with a curtailed volume of the air plenum causes rot phenomena to set in.

In an attempt to overcome the above problems, it has been suggested of mixing the soil with previously water-soaked hygroscopic granulates.

Such granulates are effective to deliver their water gradually to the soil, thus appreciably extending the case operating life. However, that method requires that the plant and its soil be manipulated to spread the granulate through the soil.

In accordance with a second prior technique, pots for hydroponics have been proposed of a type which comprises an open-top vessel with a bottom, adapted to accommodate an agglomerate sub-layer such as granulated clay, and a supply of a nutrient solution reaching a set level above the vessel bottom.

Now, these prior pots, while being widely used and in many ways satisfactory, still have the disadvantage of a short-lived operability. In fact, they cannot be left unattended for long time periods because their stored nutrient supply as originally provided is soon depleted by the plant demand.

In order to supply such pots with required amounts of water or nutrient solution, it has been suggested that timed supply systems be used, such as are typically employed on large scale installations to replace manual delivery. Such systems are, however, complicated to manufacture and operate, and hardly suitable for use with pots arranged on terraces and living spaces.

The problem underlying this invention is to provide a pot as indicated which has such constructional and operational features as to overcome the cited problems encountered with state-of-the-art pots.

This problem is solved by a pot as indicated, which is characterized in that it comprises a bottle-shaped container having a bottom and an oppositely located delivery mouth formed with a restricted cross-sectional area, said container being mounted upside down at the edge of said vessel, with said delivery mouth located at the same height as said level, and adapted to contain an additional supply of liquid for topping up said stored supply.

Further features and the advantages of the pot according to this invention will become apparent from the following description of a preferred embodiment thereof, given here by way of illustration and not of limitation with reference to the accompanying drawing

figures, where:

Figure 1 is a part-sectional elevation view of a pot according to the invention, taken along the line I-I;

Figure 2 is a sectional view of the pot of Figure 1, taken along the line II-II;

Figure 3 is a view from above of the pot of Figure 1, as viewed in the direction of the arrow III;

Figure 4 is a part-sectional elevation view of another exemplary embodiment of a pot according to the invention, as taken along the line IV-IV;

Figure 5 is a sectional view of the pot of Figure 4, taken along the line V-V; and

Figure 6 is a view from above of the pot of Figure 4, as viewed in the direction of the arrow VI.

With reference to the drawing figures, generally indicated at 1 is a pot according to the invention, which is suitable for vegetable, flower, and fruit growing in general, but specifically intended for ornamental plants on terraces and in living spaces.

The pot 1 comprises an open-top vessel 2 of parallelepipedic shape.

The vessel 2 has sidewalls, generally indicated at 3, and is of the double-bottom type. It has, in fact, a first, lower bottom 4 and a second, upper bottom 5.

The bottom 4 and bottom 5 are in mutual spaced-apart relationship and define a chamber 7 therebetween.

The upper bottom 5 is perforated with holes, generally indicated at 6, and is intended for holding the soil, not shown in the drawing, placed into the vessel 3 above the bottom 5.

The chamber 7 accommodates a water supply A, the free surface, indicated at B, whereof reaches a set level. Above this level, an air plenum C is formed in the chamber 7.

It should be noted that the perforated upper bottom 5 is formed with a depression 8, and the soil contained therein is submerged in the stored water supply A to a set depth.

The pot 1 of this invention further comprises a bottle-shaped parallelepipedic container 9 having sidewalls 10, a bottom wall 11, and an oppositely located delivery mouth 12 with a restricted cross-sectional area.

The container 9 is mounted upside down at the edge of the vessel 2 such that its delivery mouth 12 is facing downwards and located level with the free surface B of the stored water supply A.

More specifically, in the vessel 2 there is formed a compartment 13, placed close against a sidewall 3 of the vessel 2 and being open at the top and toward the chamber 7 through respective ports 13a and 13b. the compartment 13 is parallelepipedic in shape and bounded over one part by walls 3 and over the remaining part by a septum 13c formed in the vessel 2 above the bottom 5. The compartment 13 is sized to accommodate the container 9 in cartridge-like relationship.

In particular, the container 9 has a peripheral collar 14 extending at the same height as its bottom 11, and the compartment 13 has a ledge 15 level with its port 13a.

On the ledge 15 there abuts the collar 14 of the container 9 with the delivery mouth 12 at the same height as the free surface B of the stored water supply A.

The container 9 accommodates a second water supply D, which communicates downwardly with the first water supply A through the delivery mouth 12, and is overlaid at the top by a closed
space adjacent the bottom 11, wherein a vacuum is formed.

It should be noted that the delivery mouth 12 is advantageously formed at the end of a tubular lug 16 which is given a cut
resembling the mouthpiece of a flute.

Also advantageously, the delivery mouth 12 of the container
9 is formed through a stopper 17, removably and sealingly
associated with the container 9 to shut off a large cross-sectional area mouth 18 formed in the container 9 for filling it.

In dicated at 19 is a handgrip formed at the bottom 11 of
the container 9 for handling the container during its insertion
and removal into/from the compartment 13, as required.

It should be also noted that the container 9 would be made
of a suitable clear plastics material by injectiong molding, and
that at a wall 3 of the vessel 2 against which the compartment
13 is located, there is provided a vertically extending slit
20. Through the slit 20, one can check the level of the second
water supply D in the container 9.

The vessel 2, which is formed preferably from a plastics
material by injection molding, would be constructed in actual
practice as two parts separable from each other at the top
edge and fitting the one into the other interlockingly.

The stopper 17 accommodates a shutter 21 movable toward and
away from the mouth 12 to shut it off.

The shutter 21 is embodied by a solid disk 22 having an
off-centered axial bore 23 at a location which does not interferes with the mouth 12. The disk 22, which is formed from a
material of higher specific density than water, is held away
from the mouth 12, to shut it off, by a rigid rod 24 of cross-like cross-sectional configuration, which is formed integrally with the disk 22 and extends through the mouth 12 to engage with the bottom 4.

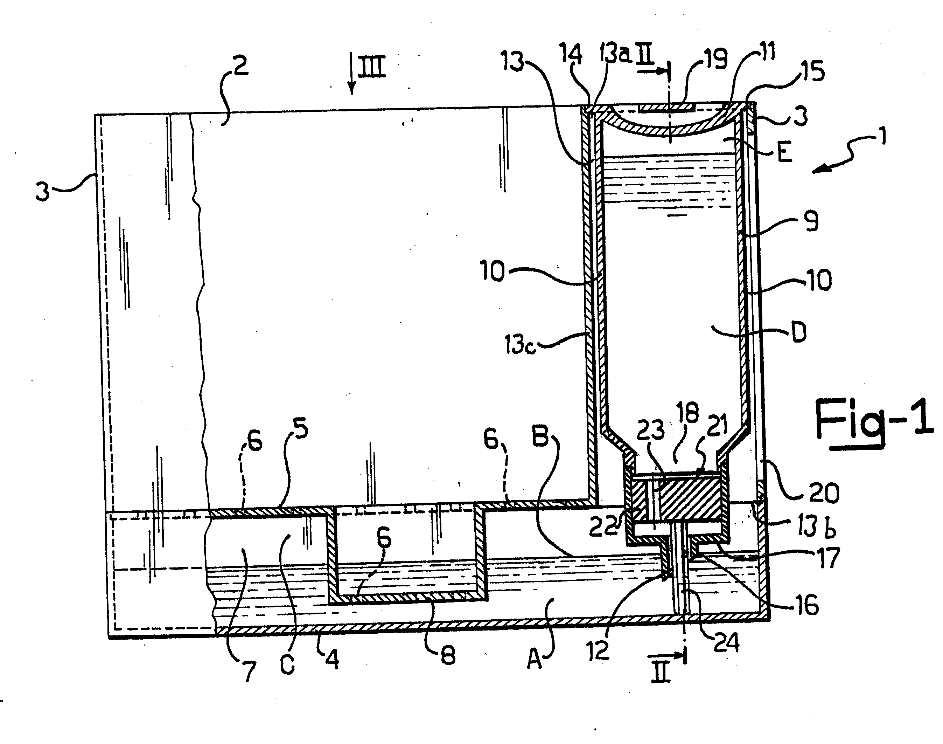

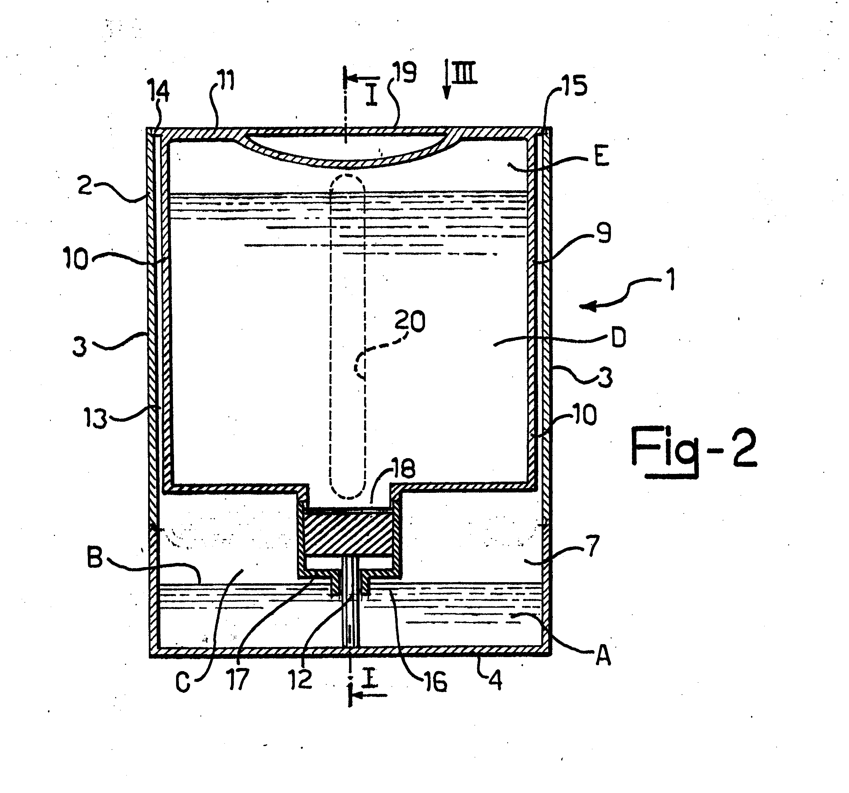

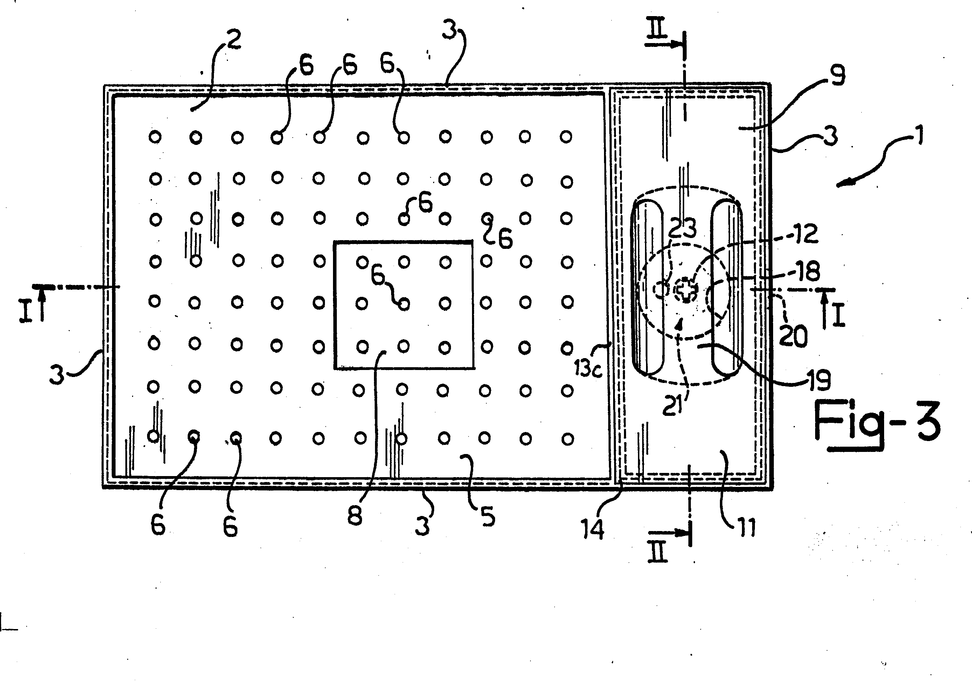

The operation of the pot according to the invention will be now described in connection with a starting condition as depicted in Figures 1, 2 and 3, where the chamber 7 and container 9 contain their respective water supplies A and D.

As the water from the supply A is drawn to the soil in the vessel 2 by any roots which may extend into the chamber 7 through the holes 6, and anyway by that portion of the soil which is in the depression 8 of the bottom 5 and submerged in the water supply, a corresponding amount of water flows from the water supply D into the container 9 into the chamber 7 restoring its level, said amount of water flowing through the delivery mouth 12 fashioned like the mouthpiece of a flute which has been temporarily uncovered by the level of the free surface B of the water supply A dropping and is covered directly on restoring to the original level.

Thus, the container 9 gradually dispenses its stored water supply, while the vacuum space E increases correspondingly.

In this way, the level of the stored water supply A is kept constant throughout the period when the pot is left unattended.

The water supply D is at any time in an equilibrium condition, its weight being counterbalanced by the atmospheric pressure prevailing at the delivery mouth 12 when the water supply A covers the mouth 12 with its free surface B, as well as by the vacuum which prevails in the space E.

By suitably sizing the container 9, the stored water supply D can ensure for the pot 1 an operating life of a desired
duration.

To restore the starting conditions and make the pot ready
for a fresh period of neglect, it will be sufficient to again
fill the container 9 with more water. The operation is more
conveniently carried     out by removing the stopper 17.

Any water left over in the container 9 would be held there
while the container 9 is being removed by the disk 2 shutting
off the mouth 12.

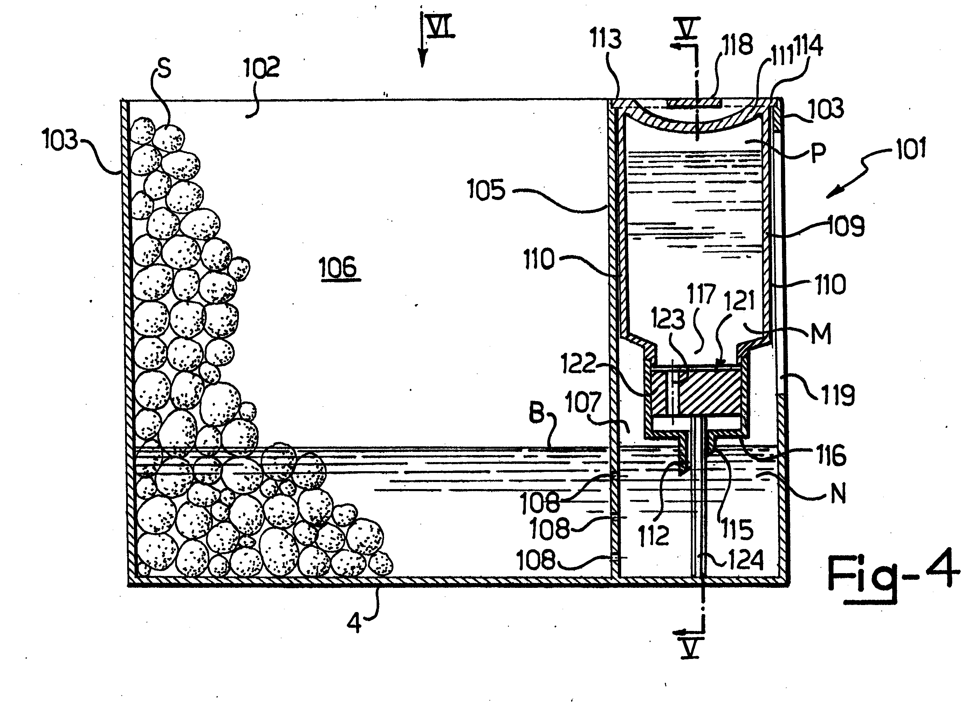

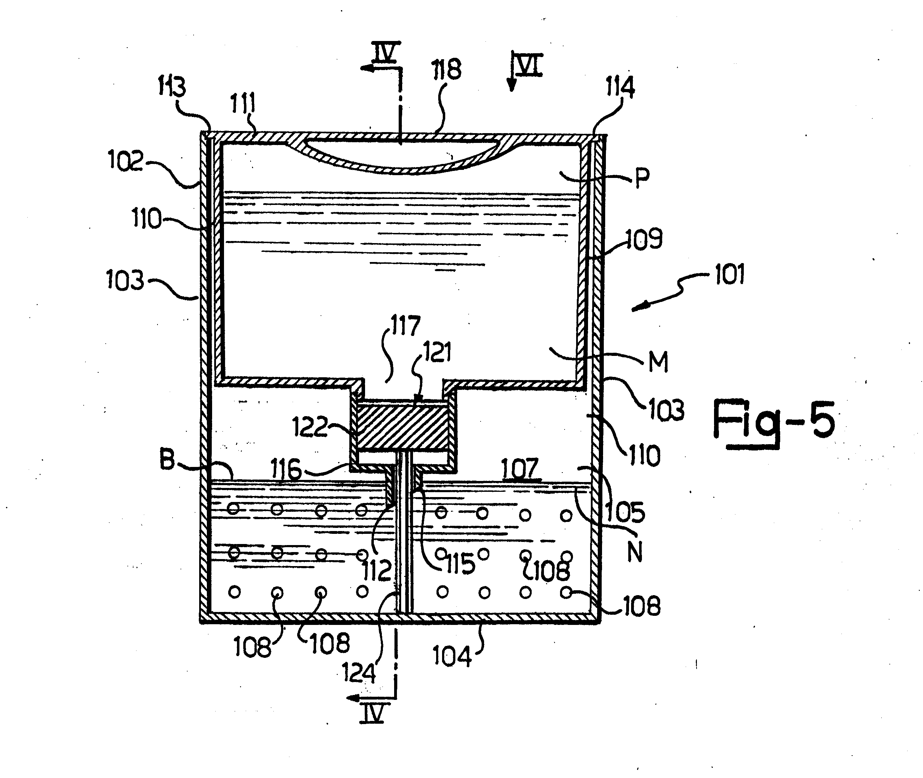

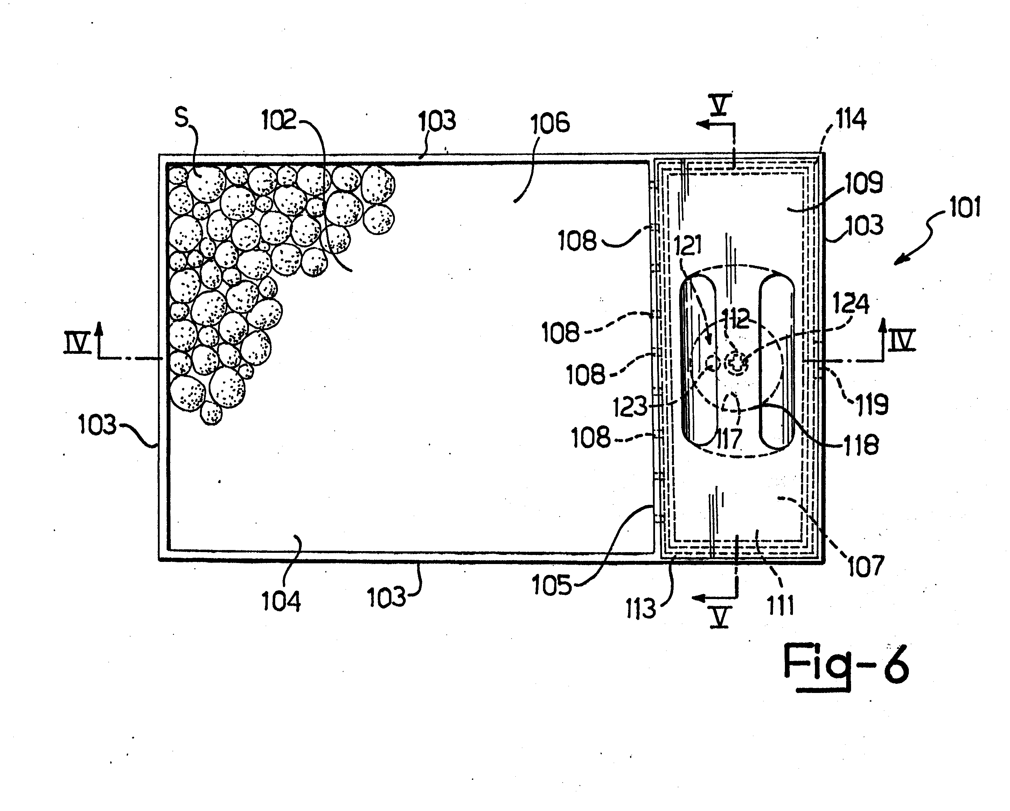

With reference to Figures 4,5,6, the numeral 101 designates
generally a further embodiment of a pot according to the
invention. The pot 101 is suitable for hydroponic growing of
ornamental plants in particular, but may be used for other
plants, such as horticultural and fruit plants.

The pot 101 comprises a vessel 102 which is parallelepipedic
in shape and open at the top.

The vessel 102 has sidewalls, generally indicated at 103,
and a bottom wall 104.

In side the vessel 102 there is firmed a septum 105, which
defines in the vessel 102 a first compartment 106 of a major
size, and a second compartment 107 of a minor size. The septum
105 is perforated with a number of holes, generally indicated
at 108. The two compartments 106 and 107 are in fluid communication
with each other through the holes 108.

An agglomerate sub-layer S, e.g. of granulated clay, fills
the compartment 106 almost completely.

The compartments 106 and 107 accommodate a supply of a
nutrient solution N, the free surface B whereof reaches a set
level.

The pot 101 further includes a bottle-like, parallelpipedic container 109 having sidewalls 110, a bottom wall 111, and an oppositely located delivery mouth 112 with a restricted cross-sectional area.

The container 109 is mounted upside down at the edge of the vessel 102, inside the compartment 107, such that the delivery mouth 112 is facing the bottom 104 and is level with the free surface B of the nutrient solution supply N.

The compartment 107 is parallelepipedic in shape and sized to accommodate the container 109 in cartridge-like relationship.

In particular, the container 109 has a peripheral collar 113 extending at the same height as its bottom 111, the compartment 107 having a ledge 114 level with its port and facing up.

On the ledge 114 there abuts the collar 113 of the container 109 on the delivery mouth 112 coming level with the free surface B of the nutrient solution supply N.

The container 109 accommodates a further nutrient solution supply M, which is in communication downwardly with the nutrient solution supply N through the delivery mouth 112 and is overlaid by a closed space P adjacent the bottom 111, wherein a vacuum is caused to form.

It should be noted that the delivery mouth 112 is advantageously formed on the end of a tubular lug 115 cut to a flute mouthpiece type of cut.

Also advantageously, the delivery mouth 112 of the container 109 is formed through a stopper 116, removably and sealingly associated with the container 109 to shut off a port 117 having a large cross-sectional area formed in the container 109 for filling it.

The reference numeral 118 designates a handgrip formed at the bottom wall 111 of the container 109 for handling the container during its insertion and removal into/from the compartment 107 as required.

It should be further noted that the container 109 is formed from a suitable clear plastics material by injection molding, and that in a wall 103 of the vessel 102 against which lies the compartment 117, there is provided a vertically extending slit 119 wherethrough one can check the level of the further nutrient solution supply M contained in the container 109.

The stopper 116 houses a shutter 121, movable toward and away from the mouth 112 to shut it off.

The shutter 121 embodies a solid disk 122 having an off-centered axial bore 123 at a location of non-interference with the mouth 112. That disk 122, which is made of a material having a higher specific density than water, is held at a position away from the mouth 112, such as not to shut it off, by a rigid rod 124 having a cross-like cross-sectional shape and being formed integrally with the disk 122, which rod extends through the mouth 112 and engages with the bottom wall 104.

The operation of the inventive pot will be next described in conjunction with a starting condition depicted in Figures 4, 5 and 6 where the compartments 106 and 107 and the container 109 contain respective nutrient solution supplies, N and M.

As the nutrient solution from the supply N is absorbed into the crop, a corresponding amount of nutrient solution passes from the supply M in the container 109 into the compartment 107 and replenishes it, flowing through the delivery mouth 122 of flute mouthpiece shape, which is left momentarily uncovered by the level of the free surface B of the nutrient solution supply N moving down, and directly covered again on the original level being restored.

At the same time, the nutrient solution flows from the compartment 107 into the compartment 106, so as to keep the same level in both compartments.

Thus, the container 109 will lose gradually its supply of nutrient solution and the vacuum space P increase correspondingly.

Thus, the level of the nutrient solution supply N is kept constant throughout the time that the pot is neglected.

The nutrient solution supply M is at any time in a condition of equilibrium, its weight being counterbalanced by the atmospheric pressure which prevails at the delivery mouth 112 when the nutrient solution supply N covers the mouth 112 with its free surface B, as well as by the vacuum prevailing in the space P.

By suitably sizing the container 109, the nutrient solution supply M will ensure an operating life of the vessel 101 having a sought duration.

In order to restore the pot to its starting condition and make it ready for a fresh period of neglect, it will be sufficient to again fill the container 109 with fresh nutrient solution. This operation will be carried out more easily by removing the stopper 116. In the event that the container 109 still contains residual nutrient solution, this is retained within the container by the disk 121 shutting off the mouth 112.

The pot of this invention affords the primary advantage of a long operating life, such that it can accept periods of neglect having any duration made necessary in actual practice, while making an amount of the liquid available throughout the period of neglect which is the optimum amount.

A further advantage of the inventive pot resides in its simple construction, which makes it easy to use and long-lived as well as easy to manufacture.

A not least advantage of the pot according to the invention is that it lends itself easily to feeding the plant with liquids enriched with nutrients, desease-fighting substances, and the like. Such substances may, in fact, be conveniently introduced into the bottle-like container together with water in the appropriate amounts.

A further advantage of the inventive pot is that no liquid can be·spilled from the container while the latter is removed from the vessel for filling, and later put back in.

Of course, to the pots described above, a skilled person in the art may apply, for the purpose of meeting specific contingent requirements, a number of modifications and changes, without departing from the protection scope of the invention as defined in the appended claims.

CLAIMS

1. A pot for ornamental plants and the like, of a type which comprises a vessel (2,102) open at the top and having a bottom (4,104) adapted to accommodate, up to a set level (B) above the bottom (4,104), a supply (A,N) of a liquid, characterized in that it comprises a bottle-like container (9,109) having a bottom (11,111) and an oppositely located delivery mouth (12, 112) having a restricted cross-sectional area, and being mounted upside doan at the edge of said vessel (2,102), with said mouth (12,112) positioned at the same height as said level (B) and adapted to contain an additional supply (D,M) of the liquid for replenishing said supply (A,N).

2. A pot for ornamental plants and the like, of a type which comprises a vessel (2) open at the top and having a double bottom, whereof a first, lower bottom (4) and a second, upper bottom (5) adapted to hold the soil are in mutually set apart relationship and define a chamber (7) therebetween adapted to accommodate, up to a set level (B), a stored water supply (A) and to form, above said level (B) an air plenum (C), characterized in that it comprises a bottle-like container (9) having a bottom (11) and an oppositely located delivery mouth with a restricted cross-sectional area and being mounted upside down at the edge of said vessel (2), with said mouth (12) positioned at the same height as said level (B) and adapted to contain an additional supply (D) of stored water for replenishing said chamber (7) as required.

3. A pot according to Claim 2, characterized in that said vessel (2) includes a compartment (13) open at the top and toward said chamber (7) and being sized for insertion cartridge-fashion into said bottle-like container (9).

4. A pot according to Claim 3, characterized in that said restricted cross-sectional area mouth (12) has a flute mouthpiece cut configuration.

5. A pot according to Claim 4, characterized in that said restricted cross-sectional area mouth (12) of the bottle-like container (9) is formed through a stopper (17) associated removably with the bottle-like container (9) to shut off a filler port (16) of large cross-sectional area.

6. A pot according to Claim 5, characterized in that it comprises a shutter (21) inside the stopper (17) movable toward and away from the restricted cross-sectional area mouth (12).

7. A pot according to Claim 6, characterized in that said shutter comprises a disk (22), an off-centered bore (23), and a rod (24) formed integrally with the disk (22) and extending through the restricted mouth (12) to engage the bottom (4).

8. A pot according to Claim 7, characterized in that said bottom of the bottle-like container (9) is provided with a handgrip (19) for handling said container.

9. A pot according to Claim 8, characterized in that said bottle-like container (9) has clear walls, and that said vessel has a slit (20) formed close against the container.

10. A pot for ornamental plants and the like, of a type which comprises a vessel (102) open at the top and having a bottom (104) adapted to accommodate an agglomerate, such as granulated clay, sub-layer (8), and a supply (N) of a nutrient solution up to a set level (B) above its bottom, characterized in that it comprises a perforated septum (105) formed in said vessel (102) and defining two compartments (106,107) therein in fluid communication with each other, and a bottle-like container (109) having a bottom and an oppositely located delivery mouth (112) with a restricted cross-sectional area, and being accommodated upside down at the edge of one of said compartments (107) with said mouth (112) arranged to face the bottom (104) and positioned at the same height as said level (B), and being effective to contain an additional supply (M) of a nutrient solution.

11. A pot according to Claim 10, characterized in that said bottle-like container (109) is housed in its respective compartment (107) by insertion cartridge-fashion thereinto.

12. A pot according to Claim 11, characterized in that said mouth (112) with a restricted cross-sectional area is configured with a flute mouthpiece cut.

13. A pot according to Claim 12, characterized in that said restricted cross-sectional area mouth (112) of the bottle-like container (109) is formed through a stopper (116) associated removably with the bottle-like container (109) to shut off a filler port (117) of large cross-sectional area.

14. A pot according to Claim 13, characterized in that it comprises a shutter (121) in the stopper (116) movable toward and away from the restricted cross-sectional area mouth (112).

15. A pot according to Claim 14, characterized in that said shutter comprises a disk (122), an off-centered bore (123), and a rod (124) formed integrally with the disk (122) and extending through the restricted mouth (112) to engage the bottom (104).

16. A pot according to Claim 15, characterized in that said bottom (111) of the bottle-like container is provided with a handgrip (118) for handling said container.

17. A pot according to Claim 16, characterized in that said bottle-like container includes a slit (119) formed close against
said container.

Fig-1

Fig-2

Fig-3

Fig-4

VI

S 102

103

113 V 118 111 114

103

P 101

105 109

110 110

117 121

123 M

122 119

B 107

108 116

108 N

108 112 115

124

4

V

4/6

0209498

Fig-5

0209498

0209498

Fig-6

101 · 114 · 109 · 103 · IV · 124 · 119 · 118 · 107 · 111 · V · V · 112 · 117 · 121 · 123 · 113 · 108 · 108 · 108 · 108 · 105 · 106 · 103 · 103 · 102 · 104 · 103 · S · IV